(19) **Europäisches Patentamt**
**European Patent Office**
**Office européen des brevets**

(11) **EP 2 984 116 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(21) Anmeldenummer: **14716289.5**

(22) Anmeldetag: **08.04.2014**

(51) Int Cl.:
*C08G 18/76* (2006.01)  *C08G 63/672* (2006.01)
*C08G 18/09* (2006.01)  *C08G 18/40* (2006.01)
*C08G 18/42* (2006.01)  *C08G 101/00* (2006.01)

(86) Internationale Anmeldenummer:
**PCT/EP2014/056976**

(87) Internationale Veröffentlichungsnummer:
**WO 2014/166898 (16.10.2014 Gazette 2014/42)**

(54) **POLYESTERPOLYOLE MIT LANGKETTIGEN POLYETHERPOLYOL-BAUSTEINEN UND DEREN VERWENDUNG IN PUR-/PIR-HARTSCHAUMSTOFFEN**

POLYESTER POLYOLS CONTAINING LONG CHAIN POLYETHER POLYOL BUILDING BLOCKS AND THEIR USE IN PUR/PIR HARD FOAM MATERIALS

POLYOLS DE POLYÉTHER AVEC MODULES DE POLYOL DE POLYÉTHER À CHAÎNE LONGUE ET LEUR UTILISATION DANS DES MOUSSES RIGIDES PUR/PIR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2013 EP 13163407**

(43) Veröffentlichungstag der Anmeldung:
**17.02.2016 Patentblatt 2016/07**

(73) Patentinhaber: **Covestro Deutschland AG**
**51373 Leverkusen (DE)**

(72) Erfinder:
• **NEFZGER, Hartmut**
**50259 Pulheim (DE)**

• **KÜNZEL, Uwe**
**51377 Leverkusen (DE)**
• **BRASSAT, Lutz**
**51375 Leverkusen (DE)**

(74) Vertreter: **Levpat**
**c/o Covestro AG**
**Gebäude 4825**
**51365 Leverkusen (DE)**

(56) Entgegenhaltungen:
**EP-A1- 0 340 586      EP-A1- 1 741 738**
**WO-A1-2010/139395**

EP 2 984 116 B1

**Beschreibung**

Die Erfindung betrifft ein Polyesterpolyol welches Baueinheiten enthält, die von Ethylenglykol und/oder Diethylenglykol abgeleitet sind sowie deren Verwendung, insbesondere zur Herstellung von PUR-/PIR-Hartschaumstoffen.

PUR-/PIR-Hartschaumstoffe werden in der heutigen Zeit vorwiegend auf Basis aromatischer Polyesterpolyole hergestellt, da diese die Flammwidrigkeit der PUR-/PIR-Hartschaumstoffe und die Wärmeleitfähigkeit positiv beeinflussen. Bei der Herstellung der aromatischen Polyesterpolyole finden als Rohstoffe vor allem Phthalsäure/-anhydrid, Terephthalsäure und Isophthalsäure Verwendung. Neben den aromatischen Polyesterpolyolen werden gelegentlich noch kurzkettige Polyetherpolyole und teilweise auch aliphatische Polyesterpolyole eingesetzt, um das Löslichkeitsverhalten von Pentanen gegenüber den aromatischen Polyesterpolyolen zu verbessern oder die Sprödigkeit der isocyanurathaltigen PUR-/PIR-Hartschaumstoffe zu reduzieren. WO 2010/139395 offenbart Polyesterpolyole aus Isophthalsäure und/oder Terephthalsäure und Oligoalkylenoxiden, die zur Herstellung von PUR-/PIR-Hartschaumstoffe verwendet werden. In der EP 1219653 sind PUR-/PIR-Hartschaumstoffe mit verbesserter Flammwidrigkeit und niedriger Wärmeleitfähigkeit auf Basis aromatischer Polyesterpolyole beschrieben. Daneben wird auch der Einsatz aliphatischer, cycloaliphatischer oder heterocyclischer Polyesterpolyole vorgeschlagen.

WO 97/48747 lehrt, dass sich PUR-/PIR-Hartschaumstoffe mit verringerter Sprödigkeit und verbesserter Oberflächenhaftung herstellen lassen, wenn die Polyolkomponente sowohl aromatische als auch aliphatische Polyesterpolyole enthält.

Des Weiteren offenbart WO 2004/060950 PUR-/PIR-Hartschaumstoffe für Sprühschaumanwendungen mit verbesserter Flammwidrigkeit und verbessertem Lambda-Alterungsverhalten auf Basis aromatischer Polyesterpolyole. Daneben wird auch der Einsatz aliphatischer oder heterocyclischer Polyesterpolyole vorgeschlagen.

WO 2004/060950 lehrt, dass sich PUR-/PIR-Hartschaumstoffe mit hoher thermischer Resistenz und verbesserter Flammwidrigkeit herstellen lassen, wenn die Polyolkomponente bevorzugt hochfunktionelle aromatische Polyesterpolyole enthält.

US 6,945,722 sowie US 2002/0040122 beschreiben für die Herstellung von rein Wasser getriebenen Systemen die Verwendung von auf Mannichbase basierten Polyolen, da nur durch die Verwendung derartiger Polyole eine gute Flammwidrigkeit und Dimensionsstabilität ermöglicht werden kann. Ein großer Nachteil derartiger Mannichbase basierten Polyole ist die hohe Viskosität und der damit verbundenen Verarbeitbarkeit als Sprühschaumsystem. Aufgrund der hohen Viskosität entstehen leicht Vermischungsstörungen und somit Schäume mit schlechten mechanisch-physikalischen Eigenschaften.

Im Bereich der Dämmplattenherstellung erfreuen sich aliphatische polyesterbasierte PUR-/PIR-Hartschäume steigender Nachfrage. Nach der Lehre von EP 1 632 511 A1 können die Polyesterpolyole aus technischer Glutarsäure sowie Ethylenglykol aufgebaut sein. Als Zusatzstoffe werden weitere Formulierungsbestandteile genannt: Ein Polyetherpolyol, ein Flammschutzmittel wie TCPP, sowie weitere Hilfs- und Zusatzstoffe.

Als denkbare Ersatz- bzw. Zusatzbausteine für technische Glutarsäure kommen als Folge der gegebenen Marktsituation (hoher Preisdruck im Dämmstoffmarkt durch "commoditisierte" Dämmstoffe wie expandiertes Polystyrol (EPS) und Mineralwolle) nur vergleichsweise preiswerte Einsatzstoffe in Betracht, insbesondere Phthalsäureanhydrid. Die Mitverwendung von Phthalsäureanhydrid in einer ansonsten aus techn. Glutarsäure und Ethylenglykol bestehenden Polyesterrezeptur führt zu ar-aliphatischen Estern, von denen allerdings bekannt ist, dass sie sich nicht optimal zur Herstellung von Hartschäumen eignen.

Nun ist es zum Teil wünschenswert, auf den Zusatz des Flammschutzmittels TCPP zumindest zunächst zu verzichten oder ein Flammschutzmittel zu einem späteren Zeitpunkt der Formulierungsherstellung zuzugeben. Dies ist mit zusätzlichem Formulierungsaufwand verbunden, wobei die kompatibilisierende Wirkung des Flammschutzmittels zunächst entfällt.

Die Aufgabe der vorliegenden Erfindung bestand also darin, verbesserte Polyesterpolyole zur Verfügung zu stellen, mit dem die sich aus dem Stand der Technik ergebenden Probleme überwunden werden können und sich insbesondere für den Einsatz in PUR-/PIR-Hartschaumrezepturen eignen. Die so erhältlichen Hartschäume sollen zudem gute Brandschutzeigenschaften aufweisen.

Diese Aufgabe wurde gelöst durch ein Polyesterpolyol welches Baueinheiten enthält, die von Ethylenglykol und/oder Diethylenglykol abgeleitet sind, wobei das Polyesterpolyol Baueinheiten enthält, die von einer zumindest difunktionellen organische Säure abgeleitet sind, wobei das Polyesterpolyol weiterhin Baueinheiten enthält, die von mindestens einem langkettigen Polyetherpolyol mit einer zahlenmittleren Molmasse von 1500 bis 8000 Da abgeleitet sind, wobei die zahlenmittlere Molmasse über die Endgruppentitration der Hydroxylendgruppen gemäß der DIN 53240 (Dezember 1971) bestimmt wird, wobei das Polyesterpolyol Hydroxylzahlen von 165 bis 260 mg KOH/g aufweist und wobei der Anteil an von dem langkettigen Polyetherpolyol abgeleiteten Baueinheiten am Polyesterpolyol 2 bis 30 Gew.-% beträgt und, der Anteil an von dem Ethylenglykol und/oder Diethylenglykol abgeleiteten Baueinheiten am Polyesterpolyol 25 bis 60 Gew.-% beträgt und der Anteil an von der zumindest difunktionellen organische Säure abgeleiteten Baueinheiten am Polyesterpolyol 40 bis 75 Gew.-% beträgt.

Es hat sich überraschenderweise herausgestellt, dass durch "Ein-estern" langkettiger Polyole in ein Polyesterpolyol, welches neben den langkettigen Polyetherpolyolen noch kurzkettige Polyole aufweist einerseits gute Brandschutzeigenschaften erzielbar sind und dabei gleichzeitig einphasige Komponenten für die Bereitstellung von PUR-/PIR-Hartschaumsystemen erhalten werden und zwar auch ohne den Zusatz kompatibilisierend wirkender Flammschutzmittel wie TCPP. Außerdem kann auf diese Weise im Vergleich zu den bislang verwendeten Mischungen aus einem Polyester, einem langkettigen Polyether und TCPP die Menge an relativ teurem langkettigen Polyether reduziert werden um Schäume mit vergleichbarer Brandresistenz zu erhalten.

Weiterhin hat sich gezeigt, dass auch bei den erfindungsgemäßen Polyesterpolyolen, also bei denjenigen, bei denen ein langkettiges Polyetherpolyol in die Polymerkette "eingeestert" ist, bei deren Verwendung in PUR-/PIR-Schäumen Schaum-Störungen auf der Schaumunterseite minimiert werden. Hierdurch werden Schäume mit guter Isolationswirkung erhalten.

Die zahlenmittlere Molmasse wird im Rahmen der vorliegenden Erfindung über die Endgruppentitration der Hydroxylendgruppen gemäß der DIN 53240 (Dezember 1971) bestimmt. Die Säurezahl wird nach DIN EN ISO 2114 (Juni 2002) ermittelt. Aus der experimentell bestimmten Hydroxylzahl OHZ in mg KOH/g wird nach der allgemein bekannten Formel $M_{äq}$=56100/OHZ die Äquivalentmasse bestimmt. Es handelt sich hierbei um eine zahlenmittlere Äquivalentmasse, die durch Multiplikation mit der Funktionalität (F) in die zahlenmittlere Molmasse ($M_n$) umgerechnet werden kann, also $M_n$ = F*$M_{äq}$, bzw. $M_n$ = 56100*F/OHZ.

Die Funktionalität (F) bezieht sich im Rahmen dieser Erfindung auf die Hydroxylendgruppen. Säureendgruppen werden nicht berücksichtigt. F ist definiert als die Zahl der OH-Endgruppen dividiert durch die Zahl der Moleküle in einem Ensemble. F ergibt sich normalerweise aus der Rezeptur, mit der das Polyol hergestellt wird, kann aber auch alternativ durch $^1$H-NMR bestimmt werden.

So erhält man F bei Polyetherpolyolen aus der bekannten Funktionalität der niedermolekularen Starterpolyole. Beispielsweise führt das bifunktionelle Starterpolyol Diethylenglykol zu bifunktionellem Polyetherpolyol, trifunktionelles 1,1,1-Trimethylolpropan zu trifunktionellem Polyetherpolyol, ein molares 1:1 Gemisch aus Diethylenglykol und 1,1,1-Trimethylolpropan zu 2,5-funktionellem Polyetherpolyol, usw.

Bei Polyesterpolyolen wird zunächst die Rezeptur bilanziert, indem man die molare Summe aller Eduktmoleküle, seien es bsplw. Dicarbonsäuren, Anhydride von Dicarbonsäuren, Diole, Triole, etc., errechnet. Analog werden die molaren Summen aller Hydroxyl-Endgruppen und getrennt aller Carboxylendgruppen aller Eduktmoleküle errechnet, wobei Carbonsäureanhydride als 2 Endgruppen aufweisend, Lactone als je eine Hydroxyl- und eine Carboxylendgruppe aufweisend in die Bilanz einbezogen werden.

Die Differenzbildung von (überschüssigen) Hydroxylgruppen und (unterschüssigen) Carboxylendgruppen (im obigen Sinne) ergibt die Anzahl der im fertigen Polyesterpolyol verbleibenden Hydroxylendgruppen. Da sich Anzahl der Eduktmoleküle während einer Veresterung mit jedem Veresterungsschritt um 1 verringert (das Reaktionswasser wird ausgetragen), verbleibt im Reaktionsgefäß nach allen Veresterungsschritten, d.h. nach vollständigem Umsatz der Carboxylgruppen (im obigen Sinne) folgende Anzahl von Polyestermolekülen:

(Summe aller Eduktmoleküle) – (Summe aller Carboxylendgruppen aller Eduktmoleküle) =

(Anzahl Polyestermoleküle)

F ergibt sich so zu: F = (Anzahl Hydroxylendgruppen im Polyesterpolyol) / (Anzahl Polyestermoleküle)

Bei dieser Betrachtung wird im Rahmen der vorliegenden Erfindung eine Ringesterbildung nicht berücksichtigt.

Unter langkettigen Polyetherpolyolen werden im Rahmen der vorliegenden Erfindung solche Verbindungen verstanden, die eine zahlenmittlere Molmasse von 1500 bis 8000 Da besitzen. Der Begriff "langkettig" dient hierbei zur Unterscheidung von den ebenfalls für das Polyesterpolyol eingesetzten kurzkettigeren Polyolen, nämlich Ethylenglykol beziehungsweise Diethylenglykol. Bevorzugte langkettige Polyetherpolyole besitzen eine zahlenmittlere Molmasse von 1500 bis 8000 Da, bevorzugt 1500 bis 7000 Da, weiter bevorzugt 2000 bis 6000 Da, besonders bevorzugt 2500 bis 6000 Da, weiter besonders bevorzugt 3500 bis 6000 Da, ganz besonders bevorzugt 4000 bis 6000 Da, wobei die zahlenmittlere Molmasse über die Endgruppentitration der Hydroxylendgruppen gemäß der DIN 53240 (Dezember 1971) bestimmt wird.

Das Polyesterpolyol weist Hydroxylzahlen von 165 bis 260 mg KOH/g auf. Das Polyesterpolyol kann ferner eine OH-Funktionalität von 1,8 bis 3 besitzen, bevorzugt 1,9 bis 2,5, besonders bevorzugt 1,95 bis 2,3.

Ferner kann das Polyesterpolyol 50 bis 100 Mol-% primäre Hydroxylendgruppen aufweisen.

Das erfindungsgemäße Polyesterpolyol kann abgesehen von den vorstehend genannten Strukturelementen prinzipiell sämtliche dem Fachmann bekannte Baueinheiten dieser Substanzklasse aufweisen. Das Polyesterpolyol enthält Baueinheiten, die von einer zumindest difunktionellen organische Säure abgeleitet und ausgewählt sind aus Glutarsäure, Bernsteinsäure, Adipinsäure, Terephthalsäure Phthalsäure, Isophthalsäure oder Kombinationen von diesen, insbesondere Glutarsäure, Bernsteinsäure, Adipinsäure, Phthalsäure. Die zuletzt genannten werden besonders bevorzugt mit Ethylenglykol als (kurzkettigem) Polyol kombiniert.

Das erfindungsgemäße Polyesterpolyol kann aliphatisch oder auch ar-aliphatisch sein. Insofern kann gemäß einer weiteren bevorzugten Ausgestaltung der Aromat-Anteil 0 bis 50 Gew.-% betragen, insbesondere 0 bis < 50 Gew.-%, jeweils bezogen auf die erhaltene Estermenge, wobei insbesondere Gemische aus Glutarsäure, Bernsteinsäure, Adipinsäure und/ oder Phthalsäure sowie Ethylenglykol eingesetzt werden. Sind aromatische Gruppen enthalten beträgt deren Anteil > 0 bis 50 Gew.-%. Der Aromat-Anteil im Ester berechnet sich aus der Esterrezeptur, indem die Einsatzmenge an aromatenhaltiger Verbindung, also beispielsweise Phthalsäureanhydrid, bzw. Isophthalsäure, ins Verhältnis zur erhaltenen Estermenge gesetzt wird.

Die Anteile an langkettigem Polyetherpolyol, Ethylenglykol und/oder Diethylenglykol und zumindest difunktioneller organischer Säure kann über weite Bereiche variiert werden. Insbesondere kann bei einem erfindungsgemäßen Polyesterpolyol

- der Anteil an von dem langkettigen Polyetherpolyol abgeleiteten Baueinheiten am Polyesterpolyol 3 bis 20 Gew.-% und

- der Anteil an von dem Ethylenglykol und/oder Diethylenglykol abgeleiteten Baueinheiten am Polyesterpolyol 35 bis 58 Gew.-% und

- der Anteil an von der zumindest difunktionellen organische Säure abgeleiteten Baueinheiten am Polyesterpolyol 50 bis 70 Gew.-%,

wobei die Gew.-%-Anteile jeweils auf die Masse des erhaltenen Polyesterpolyols bezogen sind.

Dabei kann in der Weise vorgegangen werden, dass die Edukte difunktionelle organische Säure, Ethylenglykol und/oder Diethylenglykol sowie das langkettige Polyetherpolyol gemeinsam vorgelegt und zur Reaktion gebracht werden. Es ist ebenso denkbar, zunächst die Säure und nur einen der Alkohole, das heißt das kurzkettige oder das langkettige Polyol, miteinander zur Reaktion zu bringen und das jeweils andere Polyol erst im späteren Verlaufe der Reaktionsmischung zuzuführen.

Als Katalysatoren kommen im Prinzip sämtliche für die Herstellung von Polyestern bekannte Katalysatoren in Frage. Dies sind beispielsweise Zinn-Salze, z.B. Zinndichlorid, Titanate, z.B. Tetrabutyltitanat oder starke Säuren, z.B. p-Toluolsulfonsäure. Die Polyester können aber auch ohne den Einsatz von Katalysatoren hergestellt werden.

Normalerweise werden die Polyester ohne Verwendung eines Lösungsmittels hergestellt. Sie können jedoch auch unter Zusatz eines Lösungsmittels hergestellt werden, insbesondere eines wasserschleppenden Lösungsmittel (Azeotropveresterung), wie etwa Benzol, Toluol oder Dioxan. Das Austragen des Reaktionswasser in der lösungsmittelfreien Variante wird normalerweise durch Anlegen eines Unterdrucks, insbesondere gegen Ende der Veresterung, unterstützt. Hierbei werden Drücke von 1 bis 500 mbar angewendet. Eine Veresterung ist jedoch auch oberhalb 500 mbar möglich. Das Austragen des Reaktionswasser kann hierbei auch durch Durchleiten eines inerten Gases, etwa Stickstoff oder Argon, unterstützt werden.

Die vorliegende Erfindung betrifft des Weiteren die Verwendung eines erfindungsgemäßen Polyesterpolyols für eine 1-phasige Polyolkomponente eines zweikomponentigen Reaktionssystems zur Herstellung von PUR-/PIR-Hartschaumstoffen, wobei die 1-phasige Polyolkomponente insbesondere frei von Flammschutzmitteln ist. Wie bereits vorstehend ausgeführt wurde, besteht ein Vorteil des erfindungsgemäßen Polyesterpolyols darin, dass dieses einerseits langkettige Polyolbausteine und damit die dadurch begründeten Vorteile mit sich bringt, dabei gleichzeitig jedoch nicht auf die homogenisierenden Eigenschaften eines Flammschutzmittels, insbesondere von TCPP angewiesen ist. So ist es möglich, eine marktfähige, weil 1-phasige Polyolkomponente zur Verfügung zu stellen, bei welcher der Abnehmer selbst ein Flammschutzmittel seiner Wahl zufügen kann.

Zudem betrifft die Erfindung die Verwendung der erfindungsgemäßen Polyesterpolyole bei der Herstellung von Polyurethan-Hartschaum-Produkten, wie zum Beispiel Polyurethan-Dämmplatten, Metall-Verbund-Elementen, Polyurethan-Blockschaum, Polyurethan-Sprühschaum, Polyurethan-Ortschäume oder auch in Ein- oder Mehrkomponenten-Montageschaum oder als Klebstoff-Rohstoff.

Weiterhin betrifft die Erfindung ein Reaktionssystem zur Herstellung von PUR-/PIR-Hartschaumstoffen, umfassend die folgenden Komponenten:

A) eine organische Polyisocyanatkomponente;

B) eine Polyolkomponente,

C) gewünschtenfalls Hilfs- und Zusatzstoffe sowie Treibmittel und Co-Treibmittel,

wobei die organische Polyisocyanatkomponente A) und die Polyolkomponente B) in einem solchen Mengenverhältnis zueinander eingesetzt sind, dass sich ein Index von 100 bis 500 ergibt, insbesondere 180 bis 450 und das Reaktionssystem dadurch gekennzeichnet ist, dass die Polyolkomponente B) mindestens ein erfindungsgemäßes Polyesterpolyol umfasst.

Mit Index, bzw. Kennzahl wird das mit 100 multiplizierte molare Verhältnis aller NCO-Gruppen der Komponente A) zu allen NCO reaktiven Gruppen in dem Reaktionssystem, vorliegend also der Komponenten B) und C) bezeichnet

Die Erfindung betrifft auch die Verwendung der erfindungsgemäßen Polyesterpolyole als Polyolkomponente B) eines Reaktionssystems zur Herstellung von PUR-/PIR-Hartschaumstoffen.

Unter PUR-/PIR-Hartschaumstoffen werden solche Polyurethan-Hartschaumstoffe verstanden, die Urethan-Strukturen und gegebenenfalls Isocyanurat-Strukturen enthalten. Solch ein Reaktionssystem für PUR-/PIR-Hartschaumstoffe eignet sich in bevorzugter Weise für die Herstellung von Polyurethan-Hartschaum-Produkten, wie zum Beispiel Polyurethan-Dämmplatten, Metall-Verbund-Elementen, Polyurethan-Blockschaum, Polyurethan-Sprühschaum, Polyurethan-Ortschäume oder auch in Ein- oder Mehrkomponenten-Montageschaum oder als Klebstoff-Rohstoff.

Als organische Polyisocyanatkomponente kommen grundsätzlich aliphatische, cycloaliphatische, araliphatische, aromatische und heterozyklische Polyisocyanate, wie beispielsweise jene, die von W. Siefken in Justus Liebigs Annalen der Chemie 562, S. 75-136 beschrieben wurden, z.B. solche der Formel

$$Q(NCO)_n$$

worin n = 2-4, vorzugsweise 2-3 ist und Q für einen aliphatischen Kohlenwasserstoffrest mit 2-18, vorzugsweise 6-10 Kohlenstoffatomen, einen cycloaliphatischen Kohlenwasserstoffrest mit 4-15, vorzugsweise 5-10 Kohlenstoffatomen, einen aromatischen Kohlenwasserstoffrest mit 6-15, vorzugsweise 6-13 Kohlenstoffatomen oder einen araliphatischen Kohlenwasserstoffrest mit 8-15, vorzugsweise 8-13 Kohlenstoffatomen steht, wie beispielsweise Polyisocyanate, die in der DE-OS 2.832.253, S. 10-11 beschrieben sind, geeignet.

Bevorzugt sind normalerweise solche Polyisocyanate, die technisch leicht zugänglich sind, wie beispielsweise 2,4- und 2,6-Toluylendiisocyanat (TDI) sowie Gemische dieser Isomere. Polyphenylpolymethylenpolyisocyanate, wie z.B. jene, die durch Anilin-Formaldehyd-Kondensation und darauf folgende Behandlung mit Phosgen (Roh-MDI) erhalten werden und Polyisocyanate, die Carbodiimid-, Urethan-, Allophanat-, Isocyanurat-, Harnstoff- oder Biuretgruppen enthalten (modifizierte Polyisocyanate), insbesondere jene modifizierten Polyisocyanate, die von 2,4- und/oder 2,6-Toluylendiisocyanat und von 4,4'- und/oder 2,4'-Diphenylmethandiisocyanat abgeleitet sind.

Für die Herstellung von PUR-/PIR-Hartschaumstoffen werden als organische Polyisocyanatkomponente vorzugsweise Mischungen aus Isomeren des Diphenylmethandiisocyanat (MDI) und dessen Oligomeren eingesetzt. Solche Mischungen werden allgemein als "polymeres MDI" (pMDI) bezeichnet.

Die Polyolkomponente enthält mindestens ein erfindungsgemäßes Polyesterpolyol und kann darüber hinaus auch weitere Polyolkomponenten enthalten. Als solche weiteren Polyolkomponenten kann mindestens ein aliphatisches Polyesterpolyol verwendet werden, das neben von Adipinsäure abgeleiteten Baueinheiten auch solche Baueinheiten enthält, die von Glutarsäure, Bernsteinsäure und/oder Sebacinsäure, bevorzugt Glutarsäure und/oder Bernsteinsäure, abgeleitet sind. Weiterhin ist bevorzugt, dass das aliphatische Polyesterpolyol keine aromatischen Einheiten aufweist. Ein besonders bevorzugtes aliphatisches Polyesterpolyol ist erhältlich durch Umsetzung eines Gemischs, welches 15 bis 45 Gew.-% Adipinsäure, 40 bis 55 Gew.-% Glutarsäure sowie 10 bis 35 Gew.-% Bernsteinsäure enthält. Die Bernsteinsäure und die Glutarsäure können hierin zum Teil als Anhydrid vorliegen.

Als Alkoholkomponente zur Herstellung der weiteren aliphatischen Polyesterpolyole kommen Glykole wie Ethylenglykol, Diethylenglykol, Triethylenglykol, Tetraethylenglykol, 1,2-Propandiol, 1,3-Propandiol, 1,4-Butandiol, 3-Methyl-1,5-pentandiol, 1,5-Pentandiol, 1,6-Hexandiol, 1,10-Decandiol, Glycerin, Trimethylolpropan, bzw. Mischungen daraus zum Einsatz. Bevorzugt werden Monoethylenglykol und Diethylenglykol verwendet, besonders bevorzugt Monoethylenglykol. Vorzugsweise weisen die weiteren aliphatischen Polyesterpolyole eine Funktionalität von 1,8 bis 6,5 insbesondere von 1,8 bis 3,0, eine OH-Zahl von 15 bis 500 mg KOH/g, insbesondere von 150 bis 300, sowie eine Säurezahl von 0,5 bis 5,0 mg KOH/g auf.

Neben den weiteren aliphatischen Polyesterpolyolen kann die Polyolkomponente weitere Verbindungen mit gegenüber Isocyanatgruppen reaktiven Wasserstoffatomen enthalten, die keine Polyesterpolyole sind, beispielsweise kurzkettige Polyetherpolyole oder niedermolekulare Kettenverlängerer oder Vernetzer. Diese Zusätze können eine Verbesserung der Fließfähigkeit des Reaktionsgemisches und der Emulgierfähigkeit der treibmittelhaltigen Formulierung bewirken.

Der Polyolkomponente B) können Flammschutzmittel zugesetzt werden, bevorzugt in einer Menge 5 bis 50 Gew.-%, bezogen auf die Gesamtmenge an Verbindungen mit gegenüber Isocyanatgruppen reaktiven Wasserstoffatomen in der Polyolkomponente, insbesondere 7 bis 35 Gew.-%, besonders bevorzugt 12 bis 25 Gew.-%. Derartige Flammschutzmittel sind dem Fachmann im Prinzip bekannt und beispielsweise in "Kunststoffhandbuch", Band 7 "Polyurethane", Kapitel 6.1 beschrieben. Dies können beispielsweise brom- und chlorhaltige Polyole oder Phosphorverbindungen wie die Ester der Orthophosphorsäure und der Metaphosphorsäure, die ebenfalls Halogen enthalten können, sein. Bevorzugt werden bei Raumtemperatur flüssige Flammschutzmittel gewählt.

Eingesetzt wird soviel Treibmittel und Co-Treibmittel, wie zur Erzielung einer dimensionsstabilen Schaummatrix und gewünschten Rohdichte nötig ist. Der Anteil kann beispielsweise von 0 bis 6,0 Gew.-% an Co-Treibmittel und von 1,0 bis 30,0 Gew.-% an Treibmittel betragen, jeweils bezogen auf 100 Gew.-% Polyolkomponente. Das Mengenverhältnis von Co-Treibmittel zu Treibmittel kann ja nach Bedarf von 20:1 bis 0:100 betragen.

Als Treibmittel werden Kohlenwasserstoffe, z.B. die Isomeren des Pentans, oder Fluorkohlenwasserstoffe, z.B. HFC 245fa (1,1,1,3,3-Pentafluorpropan), HFC 365mfc (1,1,1,3,3-Pentafluorbutan) oder deren Mischungen mit HFC 227ea (Heptafluorpropan), verwendet. Es können auch verschiedene Treibmittelklassen kombiniert werden. So lassen sich z.B. mit Mischungen von n- oder c-Pentan mit HFC 245fa im Verhältnis 75:25 (n-/c-Pentan:HFC 245fa) Wärmeleitfähigkeiten, gemessen bei 10°C, von weniger als 20 mW/mK erzielen.

Als Co-Treibmittel wird Wasser eingesetzt, bevorzugt in einer Menge bis 6 Gew.-%, besonders bevorzugt 0,5 bis 4 Gew.-%, bezogen auf die Gesamtmenge an Verbindungen mit gegenüber Isocyanatgruppen reaktiven Wasserstoffatomen in der Polyolkomponente.

Der Polyolkomponente werden zweckmäßigerweise in der Polyurethanchemie übliche Katalysatoren zugesetzt. Die zur Herstellung eines PUR-/PIR-Hartschaumstoffes nötigen aminischen Katalysatoren sowie die als Trimerisationskatalysatoren eingesetzten Salze werden in solcher Menge eingesetzt, dass z.B. auf kontinuierlich produzierenden Anlagen Elemente mit flexiblen Deckschichten mit Geschwindigkeiten bis zu 60 m/min je nach Elementstärke produziert werden können als auch für Isolationen an Rohren, Wänden, Dächern sowie Tanks und in Kühlschränken im Sprühschaumverfahren mit hinreichender Aushärtezeit hergestellt werden können. Auch eine diskontinuierliche Herstellung ist möglich.

Beispiele für derartige Katalysatoren sind: Triethylendiamin, N,N-Dimethylcyclohexylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Dimethylaminopropylformamid, N,N,N',N'-Tetramethylethylendiamin, N,N,N',N'-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriazin, Tetramethylammoniumhydroxid, Natriumacetat, Natriumoctoat, Kaliumacetat, Kaliumoctoat, Natriumhydroxid oder Gemische dieser Katalysatoren.

Weiterhin können Schaumstabilisatoren der Polyolkomponente zugesetzt werden, wofür vor allem Polyethersiloxane in Frage kommen. Diese Verbindungen sind im Allgemeinen so aufgebaut, dass ein Copolymerisat aus Ethylenoxid und Propylenoxid mit einem Polydimethylsiloxanrest verbunden ist. Solche Substanzen sind Beispielsweise unter der Bezeichnung Struksilon 8031 der Fa. Schill und Seilacher am Markt erhältlich. Auch silikonfreie Stabilisatoren, wie bspw. das Produkt LK 443 von Air Products, können eingesetzt werden.

In bevorzugter Ausgestaltung des erfindungsgemäßen Reaktionssystems beträgt das Gewichtsverhältnis der Komponenten B) und A) zueinander von 100 : 150 bis 100 : 300, insbesondere von 100 : 180 bis 100 : 250.

Ein weiterer Gegenstand der Erfindung ist ein Verfahren zur Herstellung von PUR-/PIR-Hartschaumstoffen, bei dem man die Komponenten A) und B) sowie gewünschtenfalls C) eines erfindungsgemäßen Reaktionssystems miteinander vermischt und reagieren lässt.

Die Herstellung der erfindungsgemäßen PUR-/PIR-Hartschaumstoffe erfolgt typischerweise nach dem dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruckoder Niederdruckverfahren nach Austrag auf ein Transportband oder in geeignete Formen zur Aushärtung gebracht werden. Beispiele sind in US-A 2 764 565, in G. Oertel (Hrsg.) "Kunststoff-Handbuch", Band VII, Carl Hanser Verlag, 3. Auflage, München 1993, S. 267 ff., sowie in K. Uhlig (Hrsg.) "Polyurethan Taschenbuch", Carl Hanser Verlag, 2. Auflage, Wien 2001, S. 83-102 beschrieben.

Die Erfindung betrifft zudem einen Hartschaumstoff, erhältlich durch Vermischen und Umsetzen der Komponenten A) und B) sowie gewünschtenfalls C) eines erfindungsgemäßen Reaktionssystems.

Ein solcher Hartschaumstoff kann in verschiedenen Anwendungsgebieten zum Einsatz kommen, vor allem als Isoliermaterial. Beispiele aus dem Bauwesen sind Wandisolationen, Rohrschalen bzw. Rohrhalbschalen, Dachisolierungen, Wandelemente und Fußbodenplatten. Insbesondere kann der Hartschaumstoff in Form einer Dämmplatte oder als Verbundelement mit flexiblen oder nicht-flexiblen Deckschichten vorliegen und eine Dichte von 25 bis 65 kg/m$^3$ aufweisen, insbesondere 30 bis 45 kg/m$^3$. In einer anderen Ausgestaltung kann der Hartschaumstoff als Blockschaum vorliegen und eine Dichte von 25 bis 300 kg/m$^3$ aufweisen, insbesondere 30 bis 80 kg/m$^3$.

Gegenstand der Erfindung sind auch die erfindungsgemäßen PUR-/PIR-Hartschäume enthaltende Laminate. Diese weisen einen Kern aus erfindungsgemäßem PUR-/PIR-Hartschaum und mit diesem fest verbundene Deckschichten auf. Die Deckschichten können flexibel oder starr sein. Beispiele sind Papierdeckschichten, Vliesdeckschichten, Metalldeckschichten (z.B. Stahl, Aluminium) und Verbunddeckschichten. Die Herstellung derartiger Laminate ist dem Fachmann im Prinzip bekannt und beispielsweise in G. Oertel (Hrsg.) "Kunststoff-Handbuch", Band VII, Carl Hanser Verlag, 3. Auflage, München 1993, S. 272-277 beschrieben. Sie erfolgt bevorzugt nach dem Doppeltransportbandverfahren, wobei die erfindungsgemäßen Laminate problemlos bei Bandgeschwindigkeiten bis zu 60 m/min herstellbar sind.

Ein besonderer Vorteil der erfindungsgemäßen PUR-/PIR-Hartschäume ist das verbesserte Brandverhalten im Vergleich zu Systemen basierend auf Polyesterpolyolen, bei denen ein langkettiges Polyetherpolyol der Polyolformulierung lediglich zugemischt wurde. Dies wird anhand der folgenden Beispiele experimentell belegt.

**Eingesetzte Rohstoffe und Methoden:**

| | |
|---|---|
| (PET) L 2830: | Desmophen® L 2830, Bayer MaterialScience AG. |
| | Aliphatisches Polyetherpolyol mit einer OHZ 28, einer Molmasse von 4000 Da und ca. 90 mol-% primären OH-Endgruppen und einer Viskosität 860 mPas bei 25°C |
| TCPP | Trischlorisopropylphosphat (Levagard PP®, Lanxess AG), |
| DMCHA | Dimethylcyclohexylamin (Rheinchemie), |
| 8033 | Struksilon 8033 der Fa. Schill und Seilacher |
| 1792 | Desmorapid® 1792, Bayer MaterialScience AG. |
| | Zubereitung enthaltend Diethylenglykol und Kaliumacetat. |
| | Trimersisierungskatalysator. |
| 44V40L | Desmodur 44V40 L der Firma Bayer MaterialScience AG mit einem NCO-Gehalt von 30 bis 32 Gew.-% |
| Glutarsäure, techn. | Gemisch aus Bernstein-, Glutar-und Adipinsäure (Lanxess) |
| Phthalsäure anhydrid | (My-ChemGmbH) |
| Isophthalsäure | (Aldrich) |
| Ethylenglykol | (Ineos) |
| n-Pentan | (Kraemer&Martin GmbH) |
| Zinn-II -Chlorid-dihydrat | (Aldrich) |

Die Analysen wurden wie folgt durchgeführt:

Dynamische Viskosität: Rheometer MCR 51 der Firma Anton Paar entsprechend DIN 53019 mit einem Messkegel CP 50-1, Durchmesser 50 mm, Winkel 1° bei Scherraten von von 25, 100, 200 und 500 $s^{-1}$. Die erfindungsgemäßen und nicht erfindungsgemäßen Polyesterpolyole zeigen von der Scherrate unabhängige Viskositätswerte.

| | |
|---|---|
| Hydroxylzahl: | anhand der Norm DIN 53240 (Dezember 1971) |
| Säurezahl: | anhand der Norm DIN EN ISO 2114 (Juni 2002) |

Die Rohdichte wurde gemäß DIN EN ISO 3386-1-98 bestimmt.

Die Brandeigenschaften wurden gemäß DIN 4102 bestimmt.

**Beispiele**

**Herstellung der Polyesterpolyole für die Vergleichsbeispiele am Beispiel A-1(V):**

In einem 4-Liter-Vierhalskolben, ausgestattet mit mechanischem Rührer, 50 cm Vigreux-Kolonne, Thermometer, Stickstoffeinleitung, sowie Kolonnenkopf, Destillationsbrücke und Vakuummembranpumpe, wurden 1820 g (13,59 Mol) technische Glutarsäure und 1168 g (18,82 Mol) Ethylenglykol vorgelegt und unter Stickstoffüberschleierung im Verlauf von 60 min. auf 200 °C erhitzt, wobei Reaktionswasser abdestillierte. Nach 4 Stunden wurden 50 mg Zinndichloriddihydrat (entspricht 20 ppm bezogen auf Endprodukt) zugegeben und die Umsetzung fortgeführt, wobei der Druck im Verlauf von 2 Stunden langsam auf 160 mbar verringert wurde. Man ließ unter diesen Bedingungen über Nacht reagieren und bestimmte nach einer Gesamtreaktionszeit von 20 Stunden die OHZ zu 197 mg KOH/g und die Säurezahl zu 2,4 mg KOH/g. Ausgetragenes Ethylenglykol wurde ergänzt und für weitere 6 Std. bei 160 °C bei Normaldruck eingerührt.

Analyse des Polyesters A-1V:

| Hydroxylzahl: | 215,8 mg KOH/g |
| Säurezahl: | 1,3 mg KOH/g |
| Viskosität: | 1510 mPas (25 °C) |
| | 280 mPas (50 C) |
| | 95 mPas (75 °C) |

**Herstellung der erfindungsgemäßen Polyesterpolyole am Beispiel A-5:**

In einem 4-Liter-Vierhalskolben, ausgestattet mit mechanischem Rührer, 50 cm Vigreux-Kolonne, Thermometer, Stickstoffeinleitung, sowie Kolonnenkopf, Destillationsbrücke und Vakuummembranpumpe, wurden 1674 g (12,5 Mol) technische Glutarsäure, 192 g (0,048 Mol) PET L2830 und 1084 g (17,46 Mol) Ethylenglykol vorgelegt und unter Stickstoffüberschleierung im Verlauf von 60 min. auf 200 °C erhitzt, wobei Reaktionswasser abdestillierte. Nach 4 Stunden wurden 50 mg Zinndichloriddihydrat (entspricht 20 ppm bezogen auf Endprodukt) zugegeben und die Umsetzung fortgeführt, wobei der Druck im Verlauf von 2 Stunden langsam auf 170 mbar verringert wurde. Man ließ unter diesen Bedingungen über Nacht reagieren und bestimmte nach einer Gesamtreaktionszeit von 22 Stunden die OHZ zu 195,3 mg KOH/g und die Säurezahl zu 0,8 mg KOH/g.

Analyse des Polyesters A-5:

| Hydroxylzahl: | 195,3 mg KOH/g |
| Säurezahl: | 0,8 mg KOH/g |
| Viskosität: | 2210 mPas (25 °C) |
| | 415 mPas (50 C) |
| | 145 mPas (75 °C) |

**Bestimmung der Phasenstabilität:**

Zu 73 g des oben beschriebenen Polyesterpolyols A-1V wurden bei 80 °C 12 Tle. PET L2830 eingerührt und für 24 Stunden bei Raumtemperatur gelagert. Es bildeten sich 2 Phasen aus, wobei die kleinere, obere den eingerührten PET L2830 beinhaltete. Diese Mischung war somit nicht phasenstabil.

Zu 73 g des oben beschriebenen Polyesterpolyols A-1V wurden bei 80 °C 6 Tle. PET L2830 eingerührt und für 24 Stunden bei Raumtemperatur gelagert. Es bildete sich 2 Phasen aus, wobei die kleinere, obere den eingerührten PET L2830 beinhaltete. Diese Mischung war somit ebenfalls nicht phasenstabil.

Bei dem erfindungsgemäßen Polyesterpolyol A-5 handelt es sich um ein phasenstabiles Polyesterpolyol, da hier das PET L2830 in die Polymerkette integriert ist.

**Tabelle 1:** Herstellung von nicht-erfindungsgemäßen Polyesterpolyolen (Vergleich)

| Polyesterpolyol | | A-1V | A-2V | A-3V | A-4V |
|---|---|---|---|---|---|
| Rezeptur: | | | | | |
| Glutarsäure, techn. | [g] | 1820 | 1607 | 1401 | 1606 |
| Phthalsäure anhydrid | [g] | | 197 | 387 | |
| Isophthalsäure | [g] | | | | 221 |
| Ethylenglykol | [g] | 1168 | 1152 | 1136 | 1152 |
| - Reaktionswasser | [g] | - 489 | - 455 | - 423 | - 479 |
| Estermenge | [g] | 2500 | 2500 | 2500 | 2500 |
| Berechnete Größen: | | | | | |

(fortgesetzt)

| Polyesterpolyol | | A-1V | A-2V | A-3V | A-4V |
|---|---|---|---|---|---|
| Aromat-Anteil im Ester | [Gew.-%] | 0 | 7,9 | 15,5 | 8,8 |
| L2830-Anteil im Ester | [Gew.-%] | 0 | 0 | 0 | 0 |
| Experimentelle Werte: | | | | | |
| OHZ, exp. | [mg KOH/g] | 215,8 | 229,5 | 239,4 | 228,9 |
| SZ, exp. | [mg KOH/g] | 1,3 | 2 | 2,8 | 3,5 |
| Viskosität, 25 °C | [mPas] | 1510 | 2000 | 2840 | 2220 |
| | | | | | |
| Bestimmung der Phasenstabilität; 73 Tle. Polyester und | | | | | |
| Zumischen von 6 Tln. L2830 | | Nein | Nein | Ja | n.b. |
| Zumischen von 12 Tln. L2830 | | Nein | Nein | Ja | n.b. |

Erläuterungen zur Tabelle 1:

Der Aromat-Anteil im Ester berechnet sich aus der Esterrezeptur, indem man die Einsatzmenge an Phthalsäureanhydrid, bzw. Isophthalsäure ins Verhältnis zur erhaltenen Estermenge setzt. Beispielsweise errechnet sich der Aromat-Anteil im Beispiel A-3V durch Division der Einsatzmenge an Phthalsäureanhydrid 387g durch die erhaltene Estermenge 2500g multipliziert mit 100, usw.

Die Bestimmung der Phasenstabilität in den Mischungsverhältnissen 73 Tle. Polyester und 6 bzw. 12 Tln. PET L2830 zeigt, dass bei niedrigen Anteilen an Aromat im Polyester (0 Gew.-%, A-1V, bzw. 7,9 Gew.-%, A-2V) nachteiligerweise keine Mischbarkeit vorliegt. Im Fall A3-V liegt offenbar in Folge des weiter erhöhten Aromatenanteils (15,5 Gew.-%) Mischbarkeit vor. Wie in Tabelle 3 gezeigt werden wird, erreicht eine derartige Formulierung jedoch nicht die geforderte Brandschutzklasse B2 (siehe Tabelle 3 Versuch B-6V).

**Tabelle 2:** Herstellung von erfindungsgemäßen Polyesterpolyolen

| Polyesterpolyol | | A-5 | A-6 | A-7 | A-8 | A-9 | A-10 |
|---|---|---|---|---|---|---|---|
| Rezeptur: | | | | | | | |
| Glutarsäure, techn. | [g] | 1674 | 1544 | 1478 | 1289 | 1288 | 1107 |
| Phthalsäure anhydrid | [g] | | | 181,3 | 356 | | 523,7 |
| Isophthalsäure | [g] | | | | | 399 | |
| Ethylenglykol | [g] | 1084 | 1007 | 1069 | 1054 | 1054 | 1040 |
| L2830 | [g] | 192 | 364 | 191 | 191 | 191 | 190 |
| - Reaktionswasser | [g] | - 449 | - 414 | - 419 | - 389 | - 432 | - 361 |
| Estermenge | [g] | 2500 | 2500 | 2500 | 2500 | 2500 | 2500 |
| Berechnete Größen: | | | | | | | |
| Aromat-Anteil im Ester | [Gew.-%] | 0 | 0 | 7,3 | 14,2 | 16 | 20,9 |
| L2830-Anteil im Ester | [Gew.-%] | 7,7 | 14,6 | 7,6 | 7,6 | 7,6 | 7,6 |
| Experimentelle Werte: | | | | | | | |
| OHZ, exp. | [mg KOH/g] | 195,3 | 187,7 | 205 | 197,8 | 198,5 | 201 |
| SZ, exp. | [mg KOH/g] | 0,8 | 1,4 | 1,7 | 0,5 | 0,5 | 1,64 |
| Viskosität, 25 °C | [mPas] | 2210 | 2760 | 2780 | 4660 | 5280 | 5950 |
| | | | | | | | |

(fortgesetzt)

| Polyesterpolyol | | A-5 | A-6 | A-7 | A-8 | A-9 | A-10 |
|---|---|---|---|---|---|---|---|
| Bestimmung der Phasenstabilität: | | Ja | Ja | Ja | Ja | Ja | Ja |

Erläuterungen zur Tabelle 2:

Der Aromat-Anteil im Ester berechnet sich aus der Esterrezeptur wie bei Tabelle 1 beschrieben. Analog wird der Anteil an L2830 im Ester bestimmt.

Da die erfindungsgemäßen Polyesterpolyole der Tabelle 2 das langkettige L2830 bereits als integraler Bestandteil enthalten, wurde die Phasenstabilität ohne weitere Zugabe an Polyether bestimmt. So zeigen etwa die Bsple. A-5 und A-6 Einphasigkeit, obwohl brutto praktisch die gleiche Zusammensetzung vorliegt, wie im Vergleichsbeispiel A-1V, siehe Tabelle 1. Bei den Beispielen A-7 bis A-10 liegt in Bezug auf die Einphasigkeit keine sichtbare Verbesserung vor, da diese Fälle auch ohne Einestern bereits als reine Mischungen phasenstabil waren. Die im Folgenden noch gezeigten Brandtests belegen jedoch, dass die erfindungsgemäßen Polyesterpolyole A-5 bis A-10 den reinen Mischungen A-1V bis A-4V im Brandverhalten überlegen sind.

**Herstellung der PUR-/PIR-Hartschaumstoffe:**

Auf Basis der vorbezeichneten Polyolkomponenten wurden PUR-/PIR-Hartschaumstoffe hergestellt. Dazu wurden der jeweiligen Polyolkomponente Flammschutzmittel, ein Schaumstabilisator auf Polyethersiloxan-Basis, Katalysatoren, Wasser und n-Pentan als Treibmittel zugesetzt, die so erhaltene Mischung mit Polyisocyanat (ein Gemisch von MDI-Isomeren und deren höheren Homologen mit einem NCO-Gehalt von 31 Gew.-%, Desmodur® 44V40L, Bayer MaterialScience AG) vermischt und das Gemisch in eine Papierform ($30 \times 30 \times 10$ cm$^3$) gegossen und darin ausreagiert. Die Rezepturen und Ergebnisse der physikalischen Messungen an den erhaltenen Proben sind in Tabelle 3 wiedergegeben.

Die Haftung wurde an Papierdeckschichten manuell in bestimmten Zeitintervallen am frischen erfindungsgemäß hergestellten isocyanurathaltigen PUR-/PIR-Hartschaumstoff untersucht. Die Ergebnisse wurden qualitativ nach Noten bewertet, wobei "gut" bedeutet, dass das Papier nur mühsam abgezupft werden kann, "befriedigend" bedeutet, dass das Papier mit geringem Kraftaufwand abgezogen werden kann, "ausreichend" bedeutet, dass das Papier leicht abgezogen werden kann, "mangelhaft" bedeutet, dass das Papier nur teilweise am Schaum haftet und "ungenügend" bedeutet, dass das Papier keine Haftung zum Schaum aufweist. Die Sprödigkeit wurde qualitativ durch Eindrücken der Schäume mit dem Daumen im Kern- und Randbereich ermittelt. Die Rohdichte wurde an einem $10 \times 10 \times 10$ cm$^3$ Würfel durch Ermittlung des Gewichtes errechnet. Die Lambdawerte wurden mit Hilfe der Wärmeflussmethode nach DIN 52616 bei 10°C Mittentemperatur bestimmt (Fox-Gerät). Die Brandeigenschaften wurden gemäß DIN 4102 bestimmt.

**Tabelle 3:** Herstellung und Eigenschaften von erfindungsgemäßen und nicht-erfindunsgemäßen (Vergleich) PUR-/PIR-Hartschäumen enthaltend Phthalsäureanhydrid

| | | B-1V | B-2 | B-3 | B-4V | B-5 | B-6V | B-7 | B-8 |
|---|---|---|---|---|---|---|---|---|---|
| Rezeptur Polyolseite: | | | | | | | | | |
| A-1V | [g] | 73 | | | | | | | |
| A-2V | [g] | | | | 73 | | | | |
| A-3V | [g] | | | | | | 73 | | |
| A-5 | [g] | | 79 | | | | | | |
| A-6 | [g] | | | 85 | | | | | |
| A-7 | [g] | | | | | 79 | | | |
| A-8 | [g] | | | | | | | 79 | |
| A-10 | [g] | | | | | | | | 79 |
| L2830 | [g] | 6 | - | - | 6 | - | 6 | 6 | 6 |
| TCPP | [g] | 15 | 15 | 15 | 15 | 15 | 15 | 15 | 15 |

(fortgesetzt)

|  |  | B-1V | B-2 | B-3 |  | B-4V | B-5 |  | B-6V | B-7 | B-8 |
|---|---|---|---|---|---|---|---|---|---|---|---|
| 8033 | [g] | 2 | 2 | 2 |  | 2 | 2 |  | 2 | 2 | 2 |
| Wasser | [g] | 1 | 1 | 1 |  | 1 | 1 |  | 1 | 1 | 1 |
| 1792 | [g] | 3 | 3 | 3 |  | 3 | 3 |  | 3 | 3 | 3 |
| DMCHA | [g] | 0,8 | 0,8 | 0,8 |  | 0,8 | 0,8 |  | 0,8 | 0,8 | 0,8 |
| n-Pentan | [g] | 17 | 17 | 17 |  | 17 | 17 |  | 17 | 17 | 17 |
| Errechnete Größen: |  |  |  |  |  |  |  |  |  |  |  |
| Polyolseite gesamt | [g] | 117,8 | 117, | 123,8 |  | 117,8 | 117,8 |  | 117,8 | 117, | 117,8 |
| Anteil Aromat an Polyolseite | [Gew.-%] | - | - | - |  | 4,9 | 4,9 |  | 9,7 | 9,5 | 14,0 |
| Anteil L2830 aus Ester | [Gew.-%] | - | 5,2 | 10,0 |  | - | 5,1 |  | - | 5,1 | 5,1 |
| Anteil L2830 zugemischt | [Gew.-%] | 5,1 | - | - |  | 5,1 | - |  | 5,1 | 5,1 | 5,1 |
| NCO-Seite: |  |  |  |  |  |  |  |  |  |  |  |
| 44V40L | [g] | 200 | 200 | 200 |  | 200 | 200 |  | 200 | 200 | 200 |
| Kennzahl | [] | 335 | 342 | 334 |  | 322 | 331 |  | 314 | 337 | 335 |
|  |  |  |  |  |  |  |  |  |  |  |  |
| Eigenschaften: |  |  |  |  |  |  |  |  |  |  |  |
| Flammhöhe, Einzelwert | [mm] | 150(3) | 130 | 130 |  | 150(2) | 130 |  | 160(2 | 140 | 140 |
| Flammhöhe, Einzelwert | [mm] | 150(2) | 130 | 130 |  | 140 | 140 |  | 150(2 | 140 | 130 |
| Flammhöhe, Einzelwert | [mm] | 150(2) | 140 | 130 |  | 150(3) | 140 |  | 150(2 | 140 | 120 |
| Flammhöhe, Einzelwert | [mm] | 140 | 130 | 120 |  | 150(3) | 140 |  | 150(2 | 130 | 130 |
| Flammhöhe, Mittel | [mm] | 148 | 133 | 128 |  | 148 | 138 |  | 153 | 138 | 130 |
| Brand |  | B3 | B2 | B2 |  | B3 | B2 |  | B3 | B2 | B2 |

Erläuterungen zur Tabelle 3:

Der Anteil Aromat an Polyolseite errechnet sich aus dem Aromat-Anteil im Ester, wie vorstehend zu den Tabellen 1 und 2 erörtert wurde, sowie dem Anteil des Polyesters an der Polyol-Seite der Schaumrezeptur. Beispielsweise enthalten 117,8 Teile des erfindungsgemäßen Schaumes B-8 79 Teile des Esters A-10. Daher enthält die Polyolseite von B-8 79/117,8*20,9 = 14,0 Gew.-% an Aromat. Analog werden die Anteile an L2830 bestimmt, wobei zur Verdeutlichung der Erfindung unterschieden wird, ob L2830 im Ester eingebaut ist oder/und in freier Form der Schaumrezeptur zugesetzt wird. Im Schaum B-8 ist beispielsweise beides der Fall.

Die Brandklasse wurde durch jeweils 4 Einzelmessungen der Flammhöhe bestimmt. Wurde ein Einzelwert unter 150 mm erhalten, so ist dieser Wert ohne Zusatz in der Tabelle 3 aufgeführt. Bei Einzelwerten ab 150 mm ist in Klammern die Zeit in Sekunden aufgeführt, nach der die angegebene Flammenhöhe erreicht wurde. Zum Erreichen der Brandklasse B2 ist es notwendig, dass alle 4 Einzelwerte unter 150 mm liegen.

Zusätzlich zu den in Tabelle 3 aufgeführten Eigenschaften wurden für alle Versuche (gilt auch für die nachfolgenden Tabellen) die Kernrohdichte, die zwischen 29,6 und 33 kg/m$^3$ lag, bestimmt. Die Reaktivität der Rezepturen, gemessen als Abbindezeit war sehr ähnlich und lag im Bereich von 31 bis 40 Sekunden.

Es wurden in allen Fällen geschlossenzellige, feinzellige, dimensionsstabile, gut an der Papierdeckschicht haftende Schaumstoffe erhalten.

B-1(V) stellt einen Fall dar, bei dem der Polyester keinen Aromatenanteil enthält und L2830 in einem Anteil von 5,1 Gew.-% polyolseitig enthalten ist. Dieser Schaum erreicht lediglich die Brandklasse B3. Wird dagegen praktisch die gleiche Menge an L2830 (Versuch B-2) oder eine erhöhte Menge (Versuch B-3) bereits im Ester eingebaut, wird bei ansonsten unveränderter Rezeptur die Flammhöhe signifikant verringert und in beiden Fällen die Brandklasse B2 erreicht.

Analog gelagert ist das Ergebnis auch bei Rezepturen, die jeweils 4,9 Gew.-% Aromat polyolseitig enthalten: B-4V, bei dem L2830 lediglich zugemischt wurde, ist bzgl. Flammhöhe und Brandklasse deutlich schlechter als der erfindungsgemäße B-5, der auch hier die Brandklasse B2 erreicht.

B-6V zeigt, dass dieser Effekt auch bei höheren Aromatenanteilen (9,7 Gew.-%) auftritt. Erst der Einbau des L2830 in die Polyesterkomponente bewirkt eine deutliche Verringerung der Flammhöhe, wobei bei in B-7 zusätzlich die gleiche Menge an L2830 auch der Polyolseite zugemischt wurde.

**Tabelle 4:** Herstellung und Eigenschaften von nicht-erfindunsgemäßen (Vergleich) PUR-PIR-Hartschäumen enthaltend Phthalsäureanhydrid

|  |  | B-9V | B-10V |
|---|---|---|---|
| Rezeptur Polyolseite: |  |  |  |
| A-2V | [g] | 73 |  |
| A-3V | [g] |  | 73 |
| L2830 | [g] | 12 | 12 |
| TCPP | [g] | 15 | 15 |
| 8033 | [g] | 2 | 2 |
| Wasser | [g] | 1 | 1 |
| 1792 | [g] | 3 | 3 |
| DMCHA | [g] | 0,8 | 0,8 |
| n-Pentan | [g] | 17 | 17 |
| Errechnete Größen: |  |  |  |
| Polyolseite gesamt | [g] | 117,8 | 117,8 |
| Anteil Aromat an Polyolseite | [Gew.-%] | 4,9 | 9,6 |
| Anteil L2830 aus Ester | [Gew.-%] | - | - |
| Anteil L2830 zugemischt | [Gew.-%] | 10,2 | 10,2 |
| NCO-Seite: |  |  |  |
| 44V40L | [g] | 200 | 200 |
| Kennzahl | [] | 319 | 312 |
|  |  |  |  |
| Eigenschaften: |  |  |  |
| Flammhöhe, Einzelwerte | [mm] | 150(2s), 140, 150(2s), 150(2s) | 160(2s), 150(2s), 140, 150(2s) |
| Flammhöhe, Mittel | [mm] | 148 | 150 |
| Brand |  | B3 | B3 |

Tabelle 4 verdeutlicht, dass eine erhöhte Menge an nicht eingebautem L2830 bei Aromatenanteilen von 4,9 Gew.-% und 9,6 Gew.-% nicht zum Erreichen der Brandklasse B2 führt. Dies wird ersichtlich durch Vergleich von B-9V mit B-5 und B-6V, bzw. von B-10V mit B-7.

Tabelle 5: Herstellung und Eigenschaften von erfindungsgemäßen und nicht-erfindungsgemäßen (Vergleich) PUR-/PIR-Hartschäumen, enthaltend Isophthalsäure.

| Polyesterpolyol | | B-11V | B-12 | B-13V |
|---|---|---|---|---|
| A4-V | [g] | 73 | | 73 |
| A-9 | [g] | | 79 | |
| L2830 | [g] | 6 | - | 12 |
| TCPP | [g] | 15 | 15 | 15 |
| 8033 | [g] | 2 | 2 | 2 |
| Wasser | [g] | 1 | 1 | 1 |
| 1792 | [g] | 3 | 3 | 3 |
| DMCHA | [g] | 0,8 | 0,8 | 0,8 |
| n-Pentan | [g] | 17 | 17 | 17 |
| Errechnete Größen: | | | | |
| Polyolseite gesamt | [g] | 117,8 | 117,8 | 117,8 |
| Anteil Aromat an Polyolseite | [Gew.-%] | 5,5 | 10,7 | 5,5 |
| Anteil L2830 aus Ester | [Gew.-%] | - | 5,1 | - |
| Anteil L2830 zugemischt | [Gew.-%] | 5,1 | - | 10,2 |
| NCO-Seite: | | | | |
| 44V40L | [g] | 200 | 200 | 200 |
| Kennzahl | [ ] | 322 | 338 | 320 |
| | | | | |
| Eigenschaften: | | | | |
| Flammhöhe, Einzelwerte | [mm] | 140, 140, 140, 150 (2s) | 140,140, 130, 130 | 150 (3s), 150(3s), 150(3s), 140 |
| Flammhöhe, Mittel | [mm] | 143 | 135 | 143 |
| Brand | | B3 | B2 | B3 |

Tabelle 5 zeigt, dass das Zumischen des L2830 in Anteilen von 5,1 und 10,2 Gew.-% zu 5,5 Gew.-% Aromat enthaltenden Polyolseiten nicht genügt, um die Brandklasse B2 zu erreichen (B-11V und B-13V). Dagegen wird durch Einbau von 5,1 Gew.-% an L2830 die Brandklasse B2 erreicht.

**Patentansprüche**

1. Polyesterpolyol welches Baueinheiten enthält, die von Ethylenglykol und/oder Diethylenglykol abgeleitet sind, wobei das Polyesterpolyol Baueinheiten enthält, die von einer zumindest difunktionellen organische Säure abgeleitet sind,
 **dadurch gekennzeichnet, dass**
 das Polyesterpolyol weiterhin Baueinheiten enthält, die von mindestens einem langkettigen Polyetherpolyol mit einer zahlenmittleren Molmasse von 1500 bis 8000 Da abgeleitet sind,
 wobei die zahlenmittlere Molmasse über die Endgruppentitration der Hydroxylendgruppen gemäß der DIN 53240 (Dezember 1971) bestimmt wird,
 wobei das Polyesterpolyol Hydroxylzahlen von 165 bis 260 mg KOH/g aufweist und
 wobei der Anteil an von dem langkettigen Polyetherpolyol abgeleiteten Baueinheiten am Polyesterpolyol 2 bis 30 Gew.-% beträgt und,

der Anteil an von dem Ethylenglykol und/oder Diethylenglykol abgeleiteten Baueinheiten am Polyesterpolyol 25 bis 60 Gew.-% beträgt und

der Anteil an von der zumindest difunktionellen organische Säure abgeleiteten Baueinheiten am Polyesterpolyol 40 bis 75 Gew.-% beträgt.

2.  Polyesterpolyol nach Anspruch 1, **dadurch gekennzeichnet, dass** das Polyesterpolyol eine OH-Funktionalität von 1,8 bis 3 besitzt, bevorzugt 1,9 bis 2,5, besonders bevorzugt 1,95 bis 2,3.

3.  Polyesterpolyol nach einem der vorstehenden Ansprüche, **dadurch gekennzeichnet, dass** das Polyesterpolyol 50 bis 100 Mol-% primäre Hydroxylendgruppen aufweist.

4.  Polyesterpolyol nach einem der vorstehenden Ansprüche, **dadurch gekennzeichnet, dass** das langkettige Polyetherpolyol eine zahlenmittlere Molmasse von 1500 bis 7000 Da aufweist, insbesondere 2000 bis 6000 Da, vorzugsweise 3500 bis 6000 Da, wobei die zahlenmittlere Molmasse über die Endgruppentitration der Hydroxylendgruppen gemäß der DIN 53240 (Dezember 1971) bestimmt wird.

5.  Polyesterpolyol nach einem der vorstehenden Ansprüche, **dadurch gekennzeichnet, dass** das Polyesterpolyol Baueinheiten enthält, die von einer zumindest difunktionellen organische Säure abgeleitet und ausgewählt sind aus Glutarsäure, Bernsteinsäure, Adipinsäure, Terephthalsäure, Phthalsäure, Isophthalsäure oder Kombinationen von diesen, insbesondere Glutarsäure, Bernsteinsäure, Adipinsäure, Phthalsäure.

6.  Polyesterpolyol nach einem der vorstehenden Ansprüche, **dadurch gekennzeichnet, dass** der Aromat-Anteil 0 bis 50 Gew.-% beträgt, wobei insbesondere Gemische aus Glutarsäure, Bernsteinsäure, Adipinsäure und/ oder Phthalsäure sowie Ethylenglykol eingesetzt werden.

7.  Polyesterpolyol nach einem der vorstehenden Ansprüche, **dadurch gekennzeichnet, dass**

    • der Anteil an von dem langkettigen Polyetherpolyol abgeleiteten Baueinheiten am Polyesterpolyol 3 bis 20 Gew.-% beträgt und

    • der Anteil an von dem Ethylenglykol und/oder Diethylenglykol abgeleiteten Baueinheiten am Polyesterpolyol 35 bis 58 Gew.-% beträgt, und

    • der Anteil an von der zumindest difunktionellen organische Säure abgeleiteten Baueinheiten am Polyesterpolyol 50 bis 70 Gew.-% beträgt.

8.  Verfahren zur Herstellung eines Polyesterpolyols nach einem der Ansprüche 1 bis 7, umfassend die Umsetzung einer wenigstens difunktionellen organischen Säure mit Ethylenglykol und/oder Diethylenglykol, bevorzugt Ethylenglykol und mindestens einem langkettigen Polyetherpolyol mit einer zahlenmittleren Molmasse von 1500 bis 8000 Da, wobei die Umsetzung gewünschtenfalls unter Zugabe wenigstens eines Katalysators erfolgt.

9.  Verwendung eines Polyesterpolyols nach einem der Ansprüche 1 bis 7 für eine 1-phasige Polyolkomponente eines zweikomponentigen Reaktionssystems zur Herstellung von PUR-/PIR-Hartschaumstoffen, wobei die 1-phasige Polyolkomponente insbesondere frei von Flammschutzmitteln ist.

10. Reaktionssystem zur Herstellung von PUR-/PIR-Hartschaumstoffen, umfassend die folgenden Komponenten:

    A) eine organische Polyisocyanatkomponente;
    B) eine Polyolkomponente
    C) gewünschtenfalls Hilfs- und Zusatzstoffe sowie Treibmittel und Co-Treibmittel,

    wobei die organische Polyisocyanatkomponente A) und die Polyolkomponente B) in einem solchen Mengenverhältnis zueinander eingesetzt sind, dass sich ein Index von 100 bis 500, insbesondere 180 bis 450 ergibt.
    **dadurch gekennzeichnet, dass**
    die Polyolkomponente B) mindestens ein Polyesterpolyol nach einem der Ansprüche 1 bis 7 umfasst.

11. Reaktionssystem nach Anspruch 10, **dadurch gekennzeichnet, dass** das Gewichtsverhältnis der Komponenten B) und A) zueinander von 100 : 150 bis 100 : 300 beträgt, insbesondere von 100 : 180 bis 100 : 250.

12. Verfahren zur Herstellung von PUR-/PIR-Hartschaumstoffen, bei dem man die Komponenten A) und B) sowie gewünschtenfalls C) eines Reaktionssystems nach Anspruch 10 oder 11 miteinander vermischt und reagieren lässt.

13. Hartschaumstoff, erhältlich durch Vermischen und Umsetzen der Komponenten A) und B) sowie gewünschtenfalls C) eines Reaktionssystems nach Anspruch 9 oder 10.

14. Hartschaumstoff nach Anspruch 13, **dadurch gekennzeichnet, dass** der Hartschaumstoff in Form einer Dämmplatte oder als Verbundelement mit flexiblen oder nicht-flexiblen Deckschichten vorliegt und eine Dichte von 25 bis 65 kg/ m$^3$ aufweist, insbesondere 30 bis 45 kg/m$^3$ oder dass der Hartschaumstoff als Blockschaum vorliegt und eine Dichte von 25 bis 300 kg/m$^3$ aufweist, insbesondere 30 bis 80 kg/m$^3$.

**Claims**

1. Polyester polyol comprising structural units derived from ethylene glycol and/or diethylene glycol,
   Wherein the polyester polyol comprises structural units derived from an at least difunctional organic acid,
   **characterized in that**
   the polyester polyol further comprises structural units derived from at least one long-chain polyether polyol having a number average molar mass of 1500 to 8000 Da,
   wherein the number average molar mass is determined via hydroxyl end group titration as per DIN 53240 (December 1971),
   wherein the polyester polyol has hydroxyl numbers of 165 to 260 mg KOH/g, and
   wherein the proportion of polyester polyol structural units derived from the long-chain polyether polyol is from 2 to 30 wt%, and
   the proportion of polyester polyol structural units derived from ethylene glycol and/or diethylene glycol is from 25 to 60 wt%, and
   the proportion of polyester polyol structural units derived from the at least difunctional organic acid is from 40 to 75 wt%.

2. Polyester polyol according to Claim 1, **characterized in that** the polyester polyol has an OH functionality of 1.8 to 3, preferably 1.9 to 2.5, more preferably 1.95 to 2.3.

3. Polyester polyol according to any preceding claim, **characterized in that** the polyester polyol has from 50 to 100 mol% of primary hydroxyl end groups.

4. Polyester polyol according to any preceding claim, **characterized in that** the long-chain polyether polyol has a number average molar mass of 1500 to 7000 Da, in particular 2000 to 6000 Da, preferably 3500 to 6000 Da, wherein the number average molar mass is determined via hydroxyl end group titration as per DIN 53240 (December 1971).

5. Polyester polyol according to any preceding claim, **characterized in that** the polyester polyol comprises structural units derived from an at least difunctional organic acid and selected from glutaric acid, succinic acid, adipic acid, terephthalic acid, phthalic acid, isophthalic acid or combinations thereof, in particular glutaric acid, succinic acid, adipic acid, phthalic acid.

6. Polyester polyol according to any preceding claim, **characterized in that** the aromatic fraction is from 0 to 50 wt%, where mixtures of glutaric acid, succinic acid, adipic acid and/or phthalic acid are used in particular as well as ethylene glycol.

7. Polyester polyol according to any preceding claim, **characterized in that**

   • the proportion of polyester polyol structural units derived from the long-chain polyether polyol is from 3 to 20 wt% and
   • the proportion of polyester polyol structural units derived from ethylene glycol and/or diethylene glycol is from 35 to 58 wt%, and
   • the proportion of polyester polyol structural units derived from the at least difunctional organic acid is from 50 to 70 wt%.

8. Method of preparing a polyester polyol according to any of Claims 1 to 7, which method comprises reacting an at least difunctional organic acid with ethylene glycol and/or diethylene glycol, preferably ethylene glycol, and at least one long-chain polyether polyol having a number average molar mass of 1500 to 8000 Da, if desired in the presence of at least one catalyst.

9. Method of using a polyester polyol according to any of Claims 1 to 7 for a 1-phase polyol component of a two-component reaction system for producing rigid PUR/PIR foams, wherein the 1-phase polyol component is in particular free from flame retardants.

10. Reaction system for producing rigid PUR/PIR foams, comprising the following components:

   A) an organic polyisocyanate component,
   B) a polyol component,
   C) optionally auxiliary and added-substance materials and also blowing and co-blowing agent,

   wherein said organic polyisocyanate component A) and said polyol component B) are used in such a mixing ratio relative to each other as to produce an index of 100 to 500, in particular 180 to 450,
   **characterized in that**
   said polyol component B) comprises at least one polyester polyol according to any of Claims 1 to 7.

11. Reaction system according to Claim 10, **characterized in that** the weight ratio between components B) and A) is from 100:150 to 100:300, in particular from 100:180 to 100:250.

12. Method of manufacturing rigid PUR/PIR foams, which comprises said components A) and B) and also optionally C) of a reaction system according to Claim 9 or 10 being mutually mixed and reacted.

13. Rigid foam obtainable by mixing and reacting said components A) and B) and also optionally C) of a reaction system according to claim 9 or 10.

14. Rigid foam according to Claim 13, **characterized in that** the rigid foam is in the form of an insulating panel or of a composite element having flexible or non-flexible outer layers and has a density of 25 to 65 kg/m$^3$, in particular 30 to 45 kg/m$^3$, or **in that** the rigid foam is in the form of a slabstock foam and has a density of 25 to 300 kg/m$^3$, in particular 30 to 80 kg/m$^3$.


**Revendications**

1. Polyester-polyol qui contient des unités constitutives qui sont dérivées d'éthylène glycol et/ou de diéthylène glycol, le polyester-polyol contenant des unités constitutives qui sont dérivées d'un acide organique au moins bifonctionnel, **caractérisé en ce que**
   le polyester polyol contient en outre des unités constitutives qui sont dérivées d'au moins un polyéther polyol à chaîne longue ayant une masse molaire moyenne en nombre de 1 500 à 8 000 Da,
   la masse molaire moyenne en nombre étant déterminée par titrage des groupes terminaux hydroxyle selon DIN 53240 (décembre 1971),
   le polyester polyol présentant des indices hydroxyle de 165 à 260 mg KOH/g et
   la proportion d'unités constitutives dérivées du polyéther polyol à chaîne longue dans le polyester polyol étant de 2 à 30 % en poids, et
   la proportion d'unités constitutives dérivées de l'éthylène glycol et/ou du diéthylène glycol dans le polyester polyol étant de 25 à 60 % en poids, et
   la proportion d'unités constitutives dérivées de l'acide organique au moins bifonctionnel dans le polyester polyol étant de 40 à 75 % en poids.

2. Polyester polyol selon la revendication 1, **caractérisé en ce que** le polyester polyol présente une fonctionnalité OH de 1,8 à 3, de préférence de 1,9 à 2,5, de manière particulièrement préférée de 1,95 à 2,3.

3. Polyester polyol selon l'une quelconque des revendications précédentes, **caractérisé en ce que** le polyester polyol comprend 50 à 100 % en moles de groupes terminaux hydroxyle primaires.

4. Polyester polyol selon l'une quelconque des revendications précédentes, **caractérisé en ce que** le polyéther polyol à chaîne longue présente une masse molaire moyenne en nombre de 1 500 à 7 000 Da, notamment de 2 000 à 6 000 Da, de préférence de 3 500 à 6 000 Da, la masse molaire moyenne en nombre étant déterminée par titrage des groupes terminaux hydroxyle selon DIN 53240 (décembre 1971).

5. Polyester polyol selon l'une quelconque des revendications précédentes, **caractérisé en ce que** le polyester polyol contient des unités constitutives qui sont dérivées d'un acide organique au moins bifonctionnel et sont choisies parmi l'acide glutarique, l'acide succinique, l'acide adipique, l'acide téréphtalique, l'acide phtalique, l'acide isophtalique ou des combinaisons de ceux-ci, notamment l'acide glutarique, l'acide succinique, l'acide adipique, l'acide phtalique.

6. Polyester polyol selon l'une quelconque des revendications précédentes, **caractérisé en ce que** la proportion de composés aromatiques est de 0 à 50 % en poids, des mélanges d'acide glutarique, d'acide succinique, d'acide adipique et/ou d'acide phtalique, ainsi que d'éthylène glycol étant notamment utilisés.

7. Polyester polyol selon l'une quelconque des revendications précédentes, **caractérisé en ce que**

   - la proportion d'unités constitutives dérivées du polyéther polyol à chaîne longue dans le polyester polyol est de 3 à 20 % en poids, et
   - la proportion d'unités constitutives dérivées de l'éthylène glycol et/ou du diéthylène glycol dans le polyester polyol est de 35 à 58 % en poids, et
   - la proportion d'unités constitutives dérivées de l'acide organique au moins bifonctionnel dans le polyester polyol est de 50 à 70 % en poids.

8. Procédé de fabrication d'un polyester polyol selon l'une quelconque des revendications 1 à 7, comprenant la mise en réaction d'un acide organique au moins bifonctionnel avec de l'éthylène glycol et/ou du diéthylène glycol, de préférence de l'éthylène glycol, et au moins un polyéther polyol à chaîne longue ayant une masse molaire moyenne en nombre de 1 500 à 8 000 Da, la réaction ayant éventuellement lieu avec ajout d'au moins un catalyseur.

9. Utilisation d'un polyester polyol selon l'une quelconque des revendications 1 à 7 pour un composant polyol monophasique d'un système réactionnel bicomposant pour la fabrication de mousses dures de PUR/PIR, le composant polyol monophasique étant notamment exempt d'agents ignifuges.

10. Système réactionnel pour la fabrication de mousses dures de PUR/PIR, comprenant les composants suivants :

    A) un composant polyisocyanate organique ;
    B) un composant polyol,
    C) éventuellement des adjuvants et additifs, ainsi que des agents gonflants et des co-agents gonflants,

    le composant polyisocyanate organique A) et le composant polyol B) étant utilisés l'un par rapport à l'autre en un rapport de quantité tel qu'un indice de 100 à 500, notamment de 180 à 450, soit obtenu, **caractérisé en ce que** le composant polyol B) comprend au moins un polyester polyol selon l'une quelconque des revendications 1 à 7.

11. Système réactionnel selon la revendication 10, **caractérisé en ce que** le rapport en poids des composants B) et A) l'un par rapport à l'autre est de 100:150 à 100:300, notamment de 100:180 à 100:250.

12. Procédé de fabrication de mousses dures de PUR/PIR, selon lequel les composants A) et B), ainsi qu'éventuellement C) d'un système réactionnel selon la revendication 10 ou 11 sont mélangés les uns avec les autres et laissés réagir.

13. Mousse dure, pouvant être obtenue par mélange et mise en réaction des composants A) et B) et éventuellement C) d'un système réactionnel selon la revendication 9 ou 10.

14. Mousse dure selon la revendication 13, **caractérisée en ce que** la mousse dure se présente sous la forme d'un panneau isolant ou sous la forme d'un élément composite muni de couches de recouvrement flexibles ou non flexibles, et présente une densité de 25 à 65 kg/m$^3$, notamment de 30 à 45 kg/m$^3$, ou **en ce que** la mousse dure se présente sous la forme d'une mousse en bloc, et présente une densité de 25 à 300 kg/m$^3$, notamment de 30 à 80 kg/m$^3$.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010139395 A
- EP 1219653 A
- WO 9748747 A
- WO 2004060950 A
- US 6945722 B
- US 20020040122 A
- EP 1632511 A1
- DE OS2832253 A
- US 2764565 A

**In der Beschreibung aufgeführte Nicht-Patentliteratur**

- **W. SIEFKEN.** *Justus Liebigs Annalen der Chemie,* vol. 562, 75-136
- Polyurethane. Kunststoffhandbuch. vol. 7
- Kunststoff-Handbuch. Carl Hanser Verlag, 1993, vol. VII, 267 ff
- Polyurethan Taschenbuch. Carl Hanser Verlag, 2001, 83-102
- Kunststoff-Handbuch. Carl Hanser Verlag, 1993, vol. VII, 272-277